# EUROPÄISCHE PATENTSCHRIFT

(11) **EP 0 736 496 B1**
(45) Veröffentlichungstag und Bekanntmachung des Hinweises auf die Patenterteilung: **13.09.2000**
(21) Anmeldenummer: 96104317.1
(22) Anmeldetag: 19.03.1996
(51) Int. Cl.: C02F 11/14, C05D 3/00, C05F 7/00

(54) **Verfahren zur Konditionierung von industriellen Schlämmen, insbesondere von Klärschlämmen**
Process for conditioning industrial sludge, especially sewage sludge
Procédé pour conditionner des boues industrielles, notamment des boues d'épuration

(30) Priorität: 04.04.1995 DE 19512565
(43) Veröffentlichungstag der Anmeldung: 09.10.1996
(73) Patentinhaber: GFR Gesellschaft für die Aufbereitung und Verwertung von Reststoffen mbH, D-30853 Langenhagen (DE)
(72) Erfinder: Demmich, Jörg, Dr.-Ing., 97084 Würzburg (DE); Weissflog, Eckard, Dr.rer.nat., 97234 Reichenberg (DE); Leininger, Gerhard, Dipl.-Ing., 97250 Erlabrunn (DE); Schräpler, Winfried, 65388 Schlangenbad (DE)
(74) Vertreter: Werner, Hans-Karsten, Dr.Dipl.-Chem.

(56) Entgegenhaltungen:
- EP-A- 0 564 857
- DE-A- 3 921 805
- DE-C- 4 304 342

## Beschreibung

Gegenstand der vorliegenden Erfindung ist ein Verfahren zur Konditionierung von industriellen und kommunalen Schlämmen, insbesondere von Klärschlämmen, die landwirtschaftlich verwertbar sind, durch Zusatz von calciumhaltigen Produkten.

Bei der Behandlung und Reinigung von kommunalen und industriellen Abwässern fällt als Abfall neben dem Sandfanggut auch Klärschlamm an. Abhängig von den jeweiligen Einleitern der Abwässer in die Kläranlage finden sich im Klärschlamm die unterschiedlichsten Nähr- aber auch Schadstoffe wieder.

Dies ist die Ursache für die bei der Verwertung, z.B. in der Landwirtschaft, auftretenden Umwelt- und Akzeptanzprobleme.

Aus diesem Grund werden ergänzend auch alternative Entsorgungswege, wie Kompostierung, Rekultivierung, Deponierung, Verbrennung oder Vergasung, beschritten. In den meisten Fällen ist es erforderlich, den Trockensubstanzgehalt des Klärschlamms durch mechanisches Entwässern, Zumischen geeigneter Additive oder sogar durch thermisches Trocknen zu erhöhen.

Bei der Entwässerung von Klärschlämmen werden kontinuierliche und diskontinuierliche Entwässerungsverfahren eingesetzt. Es ist bekannt, daß zur Verbesserung der Entwässerbarkeit geeignete Additive eingesetzt werden können bzw. müssen. Dies können einerseits polymere Flockungsmittel sein, die seit einigen Jahren verstärkt zum Einsatz kommen, oder andererseits mineralische Zusätze auf Calciumbasis gegebenenfalls kombiniert mit Eisensalzen. Dabei wird der eingesetzte Kalk meistens in Form von Calciumoxid bzw. Calciumhydroxid (z.B. Weißfeinkalk oder Weißkalkhydrat) zu einer Suspension aufbereitet und dem voreingedickten Klärschlamm zugesetzt. Weiterhin wird beispielsweise Carbidschlamm verwendet, der in der chemischen Industrie als Nebenprodukt bei der Herstellung von Acetylen als pumpfähiges Produkt anfällt und entsprechend eingesetzt werden kann.

Aus der DE 40 03 242 ist bekannt die Zugabe von feinteiligen Kohlen und/oder Aschen und aus der DE 32 15 894 die Zugabe von siloxanhydrophobiertem Material als Entwässerungshilfsmittel.

Aus der DE 37 33 532 ist bekannt, einen bei der Abwasserreinigung anfallenden Klärschlamm nach der Konditionierung mit zumindest einem calciumhaltigen Abfallprodukt enthaltend Calciumsulfat und/oder Calciumsulfit, Calciumoxid und Flugasche teilweise zu entwässern und dieses Produkt als Brennstoff dem Brennaggregat einer Müllverbrennungsanlage zuzuführen, wobei gleichzeitig SO₂ aus den Verbrennungsgasen entfernt wird.

Bei den dort zum Einsatz gekommenen Klärschlämmen und Wirbelschichtaschen ist nicht darauf geachtet worden, wieviel Flugasche hierin enthalten war. Das Beispiel nennt ein Produkt, welches ca. 40 Gew.-% Flugasche enthielt. Derartige Produkte sind mit Sicherheit nicht landwirtschaftlich verwertbar.

DE-C-4 304 342 beschreibt ein Verfahren zur Herstellung von Düngemitteln aus Klärschlamm, bei dem der Klärschlamm mit wasseraufnahmefählgem Calciumsulfat vermischt wird. Die so erhaltene pastöse Mischung wird dann einer Granullerung unterworfen. Nach dem Erreichen der gewünschten Granulatgröße und dem Abbinden des Calciumsulfates erfolgt eine Lufttrocknung der Granulate bei 25° bis 50°C.

Die Erfindung hat sich die Aufgabe gestellt, die mineralischen calciumoxid- bzw. calciumhydroxidhaltigen Rohstoffe durch geeignete pulverförmige Sekundärprodukte zu substituieren. Insbesondere sollten Produkte verwendet werden, welche im Sinne der Kreislaufwirtschaft sowie gemäß Bundesimmissionsschutzgesetz zu verwerten sind, um auf diesem Weg Rohstoffressourcen zu schonen. Bei Einsatz dieser Produkte ist sicherzustellen, daß der Klärschlamm mindestens vergleichbar gut entwässert wird und daß bei der Entsorgung der solcherart konditionierten Klärschlämme keinerlei Einschränkungen bezüglich der Einsatzmöglichkeiten z.B. bei der stofflichen Verwertung auftreten. Insbesondere sollen die Produkte landwirtschaftlich verwertbar bleiben.

Diese Aufgabe kann jetzt dadurch gelöst werden, daß als Konditionierungsmittel kalkreiche Nebenprodukte aus der Rauchgasreinigung von industriellen Feuerungsanlagen und Kraftwerken eingesetzt werden, welche weniger als 5 Gew.-% Flugasche enthalten, woraufhin mechanisch entwässert wird.

Insbesondere, wenn das Produkt nicht unmittelbar landwirtschaftlich verwertet werden kann, kann es nach der mechanischen Entwässerung getrocknet werden. Es entstehen dann lagerfähige, streufähige und jederzeit einsetzbare Produkte.

Das Verfahrensprodukt besitzt nicht nur einen Kalkanteil sondern auch ein Kornspektrum, welches mit den bisher eingesetzten Konditionierungshilfsmitteln vergleichbar ist. Zum Einsatz kommen daher erfindungsgemäß zunächst kalkreiche Nebenprodukte aus Entschwefelungsanlagen von industriellen Feuerungen und Kraftwerken, die trocken anfallen. Beim Vergleich der Analysen der bisher eingesetzten Rohstoffe mit den Analysen der verfügbaren Nebenprodukte hinsichtlich des Kalkgehalts und der Kornverteilung zeigt sich oft, daß noch durch Zumischung weiterer geeigneter Reststoffe, z.B. Wirbelschichtasche oder andere körnige Reststoffe, die gewünschten Eigenschaften eingestellt werden können. Desgleichen können Wirbelschichtaschen, die bekanntlich einen erheblichen Anteil an freiem Kalk aber auch an Flugasche enthalten, gegebenenfalls mit anderen körnigen Reststoffen zu Gemischen verarbeitet werden, die ein geeignetes Kornspektrum aufweisen und dennoch weniger als 5 Gew.-% Flugasche enthalten. Dabei ist natürlich zu beachten, daß alle eingesetzten Produkte schadstoffarm sind und daß durch die Zugabe dieser Konditionierungshilfsmittel die im Klärschlamm naturgemäß enthaltenen Schadstofffrachten nicht so erhöht werden, daß die konditionierten Schlämme nicht mehr oder nur noch eingeschränkt verwendet werden können.

Überraschenderweise hat sich bei entsprechenden Konditionierungsversuchen gezeigt, daß ein solcherart aufbereitetes Entwässerungshilfsmittel mindestens gleich gute Eigenschaften wie z.B. Carbidschlamm aufweist oder sogar noch deutliche Vorteile gegenüber diesem Produkt aufweist, beispielsweise in Bezug auf die benötigte Presszeit bei der maschinellen Entwässerung auf Kammerfilterpressen. Als gut geeignet haben sich dabei Mischungsverhältnisse von Trockensubstanz des Klärschlamms zu Konditionierungsmittel von 2:1 bis 5:1 erwiesen. Vorzugsweise liegt das Mischungsverhältnis ungefähr bei 3:1.

Bei der landwirtschaftlichen Ausbringung des solcherart konditionierten Klärschlammes wird neben der Hygienisierung eine zusätzliche Verbesserung der Düngeeigenschaften durch Erhöhung des CaO- und des Sulfatgehaltes (bei gleichzeitig geringer Löslichkeit und verzögerter Freisetzung) erreicht.

Für eine zusätzliche Anhebung des Trockensubstanzgehaltes nach dem Entwässern bzw. Abpressen von Schlämmen können die genannten Nebenprodukte auch später zudosiert und mit marktüblichen Mischern eingearbeitet werden.

Ist nach der mechanischen Entwässerung als ein zweiter Verfahrensschritt die thermische Trocknung vorgesehen, kann eine verbesserte Entklebung der Klärschlämme durch die zugegebenen mineralischen Anteile beobachtet werden. Die Trocknung des solcherart konditionierten Schlammes ist dadurch mit geringerem Aufwand durchzuführen.

Als weiterer körniger Reststoff können auch inerte Reststoffe eingesetzt werden, sofern sie geeignet sind für das Gesamtgemisch ein definiertes Kornspektrum und die benötigte chemische Zusammensetzung einzustellen. Geeignete körnige Reststoffe sind beispielsweise gemahlene Aschen, Flugaschen, gemahlene Rückstände von Baumaterial etc. Die Korngröße dieser Reststoffe wird vorzugsweise so gewählt, daß das Gemisch des Konditionierungsmittel insgesamt ein möglichst breites Kornspektrum aufweist.

Als landwirtschaftliche Verwertung ist nicht nur die Nutzung in der Landwirtschaft zum Düngen zu verstehen, sondern auch die Verwendung als Bodenhilfsstoff oder Bodensubstrat im Landschaftsbau. Das Verfahrensprodukt kann somit auch sehr gut zur Rekultivierung verwendet werden.

Selbstverständlich können die erfindungsgemäßen Verfahrensprodukte auch deponiert oder verbrannt werden, sofern nicht ein ausreichender Bedarf für dieses Verfahrensprodukt in der Landwirtschaft oder im Landschaftsbau besteht. Diese Verwertungen kommen darüber hinaus insbesondere dann in Frage, wenn die Produkte zu viel Schadstoffe und/oder Flugasche enthalten, so daß sie in der landwirtschaftliche Nutzung nicht mehr geeignet sind.

## Patentansprüche

1. Verfahren zur Konditionierung von industriellen und kommunalen Schlämmen, die landwirtschaftlich verwertbar sind insbesondere von Klärschlämmen, durch Zusatz von calciumhaltigen Produkten, dadurch gekennzeichnet, daß als Konditionierungsmittel kalkreiche Nebenprodukte aus der Rauchgasreinigung von industriellen Feuerungsanlagen und Kraftwerken eingesetzt werden, welche weniger als 5 Gew.-% Flugasche enthalten, woraufhin mechanisch entwässert wird.

2. Verfahren gemäß Anspruch 1, dadurch gekennzeichnet, daß nach der mechanischen Entwässerung getrocknet wird.

3. Verfahren gemäß Anspruch 1 oder 2, dadurch gekennzeichnet, daß die Kraftwerksnebenprodukte zusätzlich mit anderen körnigen Reststoffen vermischt werden, um für das Gesamtgemisch ein definiertes Kornspektrum mit einer breiteren Korngrößenverteilung zu erreichen und die für die landwirtschaftliche Verwertung gewünschte chemische Zusammensetzung einzustellen.

## Claims

1. A process for the conditioning of industrial and municipal sludges which can be utilized in agriculture, especially sewage sludges, by the addition of calcium-containing products, characterized in that lime-rich side-products from the flue gas purification of industrial firing plants and power plants containing less than 5% by weight of fly ashes are employed as conditioning agents, followed by mechanical dewatering.

2. The process according to claim 1, characterized in that said mechanical dewatering is followed by a drying step.

3. The process according to claim 1 or 2, characterized in that said side-products from power plants are additionally mixed with other granular waste materials to achieve a defined grain spectrum with a broader grain size distribution for the total mixture and to create the chemical composition desired for agricultural utilization.

## Revendications

1. Procédé de conditionnement de boues industrielles et communales pouvant être réutilisées en agriculture, en particulier des boues de curage, par addition de produits contenant du calcium, caractérisé en ce qu'on utilise, comme agent de conditionnement, des produits secondaires riches en calcaire, provenant du dépoussiérage des fumées de foyers industriels et de centrales électriques, qui contiennent moins de 5 % en poids de cendres volantes, qu'on soumet ensuite à une extraction mécanique de l'humidité.

2. Procédé selon la revendication 1, caractérisé en ce qu'on effectue un séchage après l'extraction mécanique de l'humidité.

3. Procédé selon la revendication 1 ou 2, caractérisé en ce qu'on mélange les produits secondaires provenant de centrales électriques, en outre, avec d'autres sous-produits granuleux pour conférer au mélange total un spectre granulométrique défini avec une répartition granulométrique plus large, et pour ajuster la composition chimique souhaitée pour l'utilisation en agriculture.
